Europäisches Patentamt

European Patent Office

Office européen des brevets

(11) Publication number: **0 052 353**
**B1**

(12) **EUROPEAN PATENT SPECIFICATION**

(45) Date of publication of patent specification: **13.05.87**

(51) Int. Cl.⁴: **A 61 C 15/00**

(21) Application number: **81109659.3**

(22) Date of filing: **12.11.81**

(54) A dental implement for removing plaque and massaging gums.

(30) Priority: **18.11.80 JP 162346/80**

(43) Date of publication of application:
**26.05.82 Bulletin 82/21**

(45) Publication of the grant of the patent:
**13.05.87 Bulletin 87/20**

(84) Designated Contracting States:
**AT BE CH DE FR GB IT LI LU NL SE**

(56) References cited:
**FR-A-2 186 831**
**FR-A-2 408 343**
**GB-A-1 276 031**
**US-A-1 575 317**
**US-A-2 160 731**
**US-A-3 464 775**
**US-A-3 558 392**

(73) Proprietor: **Showa Yakuhin Kako Co., Ltd.**
**No. 16-5, 1-chome, Kyobashi**
**Chuo-ku Tokyo (JP)**

(73) Proprietor: **AuBEX CORPORATION**
**No. 1-12, Narihira 5-chome**
**Sumida-ku Tokyo 130 (JP)**

(72) Inventor: **Nakao, Shunichi**
**No. 5-15, 1-chome Nishisakado**
**Sakado-shi Saitama-ken (JP)**
Inventor: **Yamauchi, Motonori**
**No. 11-6, 4-chome Kugo-machi**
**Yokosuka-shi Kanagawa-ken (JP)**
Inventor: **Suzuki, Churyo**
**No. 11-24, 1-chome Suwada**
**Ichikawa-shi Chiba-ken (JP)**

(74) Representative: **Vossius & Partner**
**Siebertstrasse 4 P.O. Box 86 07 67**
**D-8000 München 86 (DE)**

## Description

Dental plaque is considered as the cause of dental caries and paradental diseases in the dental treating and hygienic fields.

As is well known, tooth brushes are used conventionally as the typical implement for removing plaque and massaging gums in general. Said plaque starts first from deposition of a thin film essentially comprising protein and carbohydrate over the surface of enamel of tooth, to which then oral bacteria are attached and proliferated to form the plaque which consists mainly of bacteria and the metabolic products thereof. Said plaque can be removed from the major surface area of teeth by brushing after every meal but there are parts which the tooth brush cannot reach and where plaque is accumulated. Plaque not only becomes the direct cause of dental caries and inflammations of gums, but when calcification progresses, it turns into dental calculus and is deposited more firmly. And moreover, since said plaque and dental calculus are considered to be one cause of the onset and exacerbation of alveolar blennorrhea, a paradental disease, complete healing from which is quite difficult, in the view of dental hygiene, removal of plaque has a quite significant meaning.

As implements for removing the plaque deposited interdentally or on cervical parts, a tooth pick-like implement made of wood and having a thickness capable of being inserted between teeth (Fig. 1), a linear synthetic filament or an implement with a bow-like section where the filament is stretched (Fig. 2), or a tooth brush with a conical projection of rubber with a pointed tip provided at the end of the rod (Fig. 3) have been put on the market, and the patients who visit dentists are instructed to remove plaque by rubbing daily the interdental and cervical parts by using such implements.

However the wooden tooth pick-like implement has not a suficient strength at the tip for rubbing the narrow interdental parts, and if the strength is increased by thickening the tip, it cannot be applied to the narrow interdental part. On the other hand, the method of rubbing the interdental parts by the use of a thread-like synthetic filament held by the fingers of both hands has difficulties in being widely accepted because of the troublesome handling.

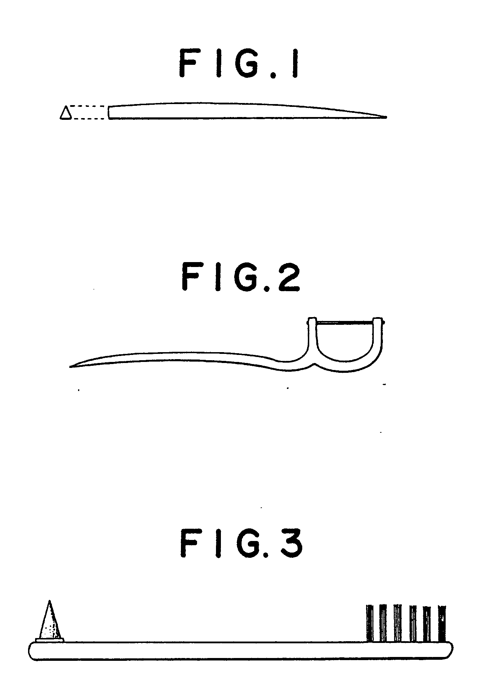

The implement of Fig. 2 with the section where the filament is stretched requires a skill to effect satisfactory rubbing with it, and it cannot be considered a satisfactory implement for removing plaque correctly. On the other hand, it is a matter of course that the rubber projection at the end of the tooth brush of Fig. 3 makes rubbing of the narrow interdental part difficult. All of these implements have disadvantages as implements for removing plaque. Thus there is a need for an implement with which removal of plaque can readily be effected daily by the patient himself. US—A—1 575 317 discloses a toothpick composed of parallel fibers, said fibers being held together by a cellulose covering or binder. The covering consists of a material being different from the material of the fibers, and it may terminate near the tip of the toothpick leaving the fibers exposed.

US—A—2 160 731 discloses a rod-shaped element intended for cleaning teeth and for massaging the gum, said element consisting of wood fiber threads and a binder of boric acid. After the binding agent has been dissolved in the saliva, the wood fibers are forming a brush at the end of the element.

FR—A—2 186 861 discloses a dental instrument having a rubber core and a wood shell, the rubber core being exposed at the end of the instrument.

## Description of the Invention

The object of the present invention is to improve the deficiencies in handling the conventional implements and to provide an implement highly effective for the removal of plaque and massaging gums and produceable on a commercial scale and offered at a low cost.

The implement of the present invention for removing plaque and massaging gums is characterized by the features of the claims. On the outer peripheral section of a fibrous structure obtained by bundling or bundling and bonding a plurality of fibers in a longitudinal direction, there is provided a shell layer surrounding and reinforcing the fibrous layer in the interior section to form a slender rod-like body of appropriate length, then the shell layer is partly cut or ground to expose the fibrous layer in the interior thereof to form a brushing section.

According to the structure of the invention, it is possible to produce readily and in large quantities the various implements having the features set forth below by the arts of manufacture known from, for example, JP—A—39889/1970, US—A—3,558,392, or US—A—3,464,775, etc. relating to the liquid effusing elements for writing instruments.

Each of said liquid-effusing elements comprises a slender rod-like body having an inner fibrous structure formed of a plurality of fibers arranged in a longitudinal direction and a shell layer surrounding and reinforcing said inner fibrous structure, said shell layer being made of a thermally melt-adhered thermoplastic resin.

## Brief Description of the Drawing

Fig. 1 shows a wooden, tooth pick-like implement that has been conventionally used;

Fig. 2 shows a conventional implement where synthetic fibers are stretched in a bow-like fashion on a plastic supporting body.

Fig. 3. shows a conventional implement where at one end of a tooth brush, a conical projection of rubber with a pointed tip is provided.

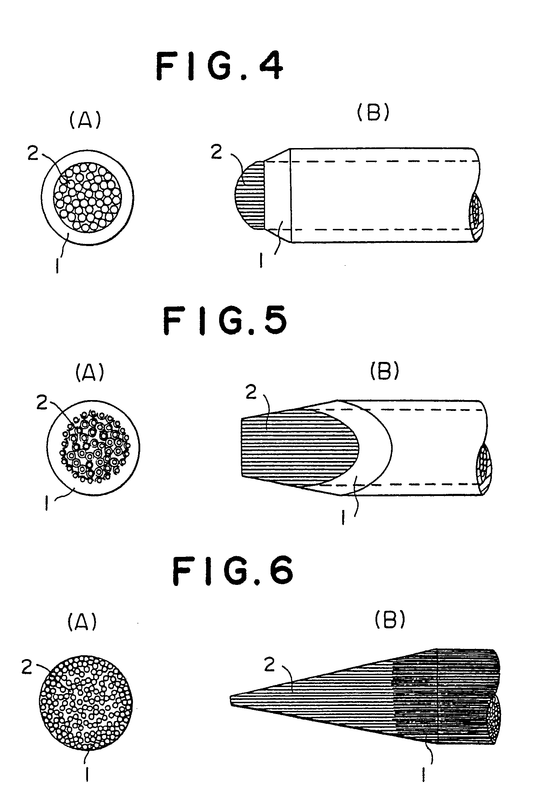

Fig. 4A shows a cross-section of the stem section of the implement of the present invention as described in Example 1;

Fig. 4B shows the tip section of the front view thereof. Reference sign 1 is the tubular shell layer, and 2 shows the nylon filament tow structure. The tubular shell layer is formed by melt-coating or melt-bonding on a synthetic resin over bundled fibers. The resin forming the shell layer can be the same as or different from that of the fibers.

Fig. 5 shows the implement of Example 2 and Fig. 6 that of Example 3, respectively, where A is a cross-section of the stem section and B is the tip section of the front view thereof; reference sign 1 shows the shell layer of the respective implement, 2 shows the filament tow structure thereof. In Fig. 5A, the shell layer is formed by heat-melting the surface of the bundled fibers, the resin forming the shell layer and the fibers being the same. In Fig. 6A, the shell layer is formed by impregnating the fibrous structure with a solution of a curable synthetic resin, the resin forming the shell layer being the same as or different from that of the curable synthetic resin.

Hereinafter the present invention is explained further in detail in actual examples.

## Example 1

Polyacetal resin was melt-coated over a nylon filament tow of 8000 denier (about 890 tex) comprising filaments of 10 denier (about 1.1 tex) fineness to form a tubular shell layer, and at the same time, a continuous fibrous structure of a diameter of 2mm was formed, and one end of a slender rod-like body obtained by cutting the above structure to the length of 25mm was cut into a semispherical shape as shown in Fig. 4 to expose the fibrous layer. Then it was subjected to sterilizing treatment to obtain an implement for removing plaque.

When the implement was used for healthy young people whose teeth had almost no interstices in between, the fine fibrous layer where the filaments ran uniformly lengthwise got untied adequately to massage the interdental parts and gums so that the plaque in the portions where the bristles of a tooth could not reach to massage could be well cleaned up.

## Example 2

A composite filament tow of polyamide-polyester of 15000 denier (about 1670 tex) comprising filaments of 15 denier (about 1.67 tex) fineness was heated and compressed and the surface layer was melt-molded to form a shell layer and thereby to form a continuous fibrous structure of a diameter of 2mm. Then the structure was cut into the length of 30mm, and one end of the thus obtained slender rod-like body was cut or ground into the shape as shown in Fig. 5 to expose the fibrous layer. Then it was subjected to sterilizing treatment to obtain an implement for removing plaque.

The implement thus obtained had a brushing section with much greater softness than that of the implement of Example 1, and excellent flexibility in the section reaching the shell layer. It was found to have a high plaque-removing and easy massaging effect.

## Example 3

A crimped polyester filament tow of 9000 denier (1000 tex) comprising filaments of 3 denier (0.33 tex) fineness was heated and compressed to form a bundled fibrous structure. Then the bundled fibrous structure was impregnated with a thermosetting adhesive solution and was dried and cured by heating to form the outer shell layer surrounding a continuous fibrous structure of a diameter of 1.5mm. The structure was then cut to a length of 40mm, and one end of the thus obtained slender rod-like body was cut or ground into a conical shape as shown in Fig. 6 to expose the interior fibrous layer, and subsequently it was subjected to sterilizing treatment to obtain an implement for removing plaque.

When the implement was used for middle-aged and old patients with progressed paradental diseases, where pocket formation in the gums and gingival retraction caused by absorption of alevolar bones (i.e. erosion) were observed, it was found to be a massaging implement with high plaque-removing effect which made it quite easy to massage deep in the interdental portions and had the softness favorable in contact with teeth and gum surfaces due to the fineness of the filaments in its brushing section, and good flexibility and untying characteristics, and exerted satisfactory massaging effect to rub the gums attacked by paradental diseases and at the same time to activate capillary vessels.

Since the implement of the invention has the filaments bundled lengthwise, it brings forth a capillary action among the filaments. Therefore it is also possible to let hold in the interstices among the filaments chemicals and perfumes suitable for different purposes.

For example, when substances such as alkali compounds like sodium bicarbonate which are hygienically harmless and facilitate removal of plaque, a surfactant, a germicidal such as chlorohexidine salt that acts on the plaque-forming bacteria such as Streptococcus mutans, a deodorant such as sodium copper chlorophyllin, and a perfume such as Kuromoji-oil respectively, alone or in combination of plural kinds, in the form of an aqueous solution or a solution of an organic solvent, are absorbed in the fibers during the processing thereof after molding and dried, the chemicals are effused by means of saliva in the use and exert the respective effects.

Furthermore, since the implement of the invention has a structure where the interior fibrous structure is coated with an outer peripheral shell layer having a greater physical strength as compared with that of the interior fibrous structure, it has the merit that the physical properties, the thickness and the amount of the fibers can be selected in a suitable way for the purposes of the fibrous structure forming the brushing section. As for the material of the fibers, ceramic fibers in a broad sense, metal fibers such as stainless steel will suit to remove dental plaque in progressed solidity, and the synthetic fibers belonging to the respective types such as polyamide, polyester, polyvinyl alcohol, polyacetal, polyolefin, polyurethane, etc. may be used for eliminating dental plaque on the surface of teeth, between teeth, and in the pockets formed in the gums. In the case of inorganic high molecular fibers and metal fibers, fibers having a fineness of less than 39 μm and in the case of synthetic high molecular fibers, those having a fineness of less than 20 denier (about 2.2 tex) are used. By using such fine fibers, appropriate stimulation for gums can be given by massage without doing harm to the gums, and the effect of removing dental plaque is high because of appropriate distortion of the fibers to contact easily the tooth-surface and to reach the inner parts between the teeth.

Regarding the modes for forming the shell layer as shown in the respective Examples, the mode of Example 1 can be employed for the fiber material of any type and the shell layer-forming material can also be selected appropriately from the thermoplastic synthetic resin molding materials commercially available in general. The mode of Example 2 is, on the other hand, suitable for synthetic high molecular fiber materials having good heat-melting properties, whereas the mode of Example 3 is suitable for synthetic high molecular fiber materials subjected to crimping processing, and the shell layer forming materials can be appropriately selected from the adhesives and coating materials as well as from the molding materials. Still further, since the brushing section of the implement of the invention of the present application is formed by cutting or grinding the shell layer to expose the interior fibrous structure, the tip variant in shape can be readily obtained, and thus it has the merit that the curves at the tip, diameter and thickness may be formed in various ways within the extent of the object of use. Ordinarily, the most desirable diameter of the tip is in the range from 0.1 to 2mm, and the length from 1 to 5mm. For the stem, any size of diameter and length will do so long as they are within the ranges one can readily pick up, and the suitable sizes are generally the diameter of from 0.8 to 3mm and the length of from 25 to 50mm. But the diameters and the lengths as above indicate only appropriate examples whereby the present invention is not limited at all.

## Claims

1. A dental implement for removing plaque and massaging the gums comprising a slender rod-like body having an inner fibrous structure (2) formed of a plurality of fibers arranged in a longitudinal direction and a shell layer (1) surrounding and reinforcing said inner fibrous structure (2), said shell layer (1) terminating remote from an end of said inner fibrous structure (2) to expose said inner fibrous structure (2) and thus to provide a brushing section characterized in that said shell layer (1) comprises a thermally melt-adhered thermoplastic resin.

2. A dental implement according to claim 1, characterized in that said brushing section is provided by cutting or grinding said shell layer (1) to expose said inner fibrous structure (2).

3. A dental implement according to claim 1 or 2, characterized in that said shell layer (1) comprises a tubular thermoplastic synthetic resin.

4. A dental implement according to claim 1 or 2, characterized in that said shell layer (1) comprises a synthetic fibrous layer and at least a layer of adhesive selected from thermoplastic synthetic resins or thermosetting resins.

5. A dental implement according to any of claims 1 to 4, characterized in that the fibrous structure (2) of the brushing section is formed from synthetic fibers.

6. A dental implement according to claim 3, characterized in that the fibrous structure (2) in the brushing section is formed from inorganic high molecular fibers or metal fibers.

7. A dental implement according to any of claims 1 to 6, characterized in that the fibrous structure (2) contains one or more kinds of hygienically harmless alkali substances, surfactant, bactericide, deodorant, perfume or the like.

## Patentansprüche

1. Instrument zum Entfernen von Zahnbelag und Massieren des Zahnfleisches, das einen dünnen, stabförmigen Körper mit einem inneren aus mehreren in Längsrichtung angeordneten Fasern gebildeten Faseraufbau (2) une eine den inneren Faseraufbau (2) umgebenden und verstärkenden Ummantelungsschicht (1) aufweist, wobei die Ummantelungsschicht (1) entfernt von einem Ende dieses inneren Faseraufbaus (2) endet und dadurch der innere Faseraufbau (2) freiliegt und einen Bürstenabschnitt bereitstellt, dadurch gekennzeichnet, daß die Ummantelungs
schicht (1) ein thermisch schmelzklebendes thermoplastisches Harz aufweist.

2. Vorrichtung nach Anspruch 1, dadurch gekennzeichnet, daß der Bürstenabschnitt bereitgestellt wird durch Schneiden oder Schleifen der Ummantelungsschicht (1), so daß der innere Faseraufbau (2) freigelegt wird.

3. Vorrichtung nach Anspruch 1 oder 2, dadurch gekennzeichnet, daß die Ummantelungsschicht (1) rohrförmig ein thermoplastisches Kunstharz aufweist.

4. Vorrichtung nach Anspruch 1 oder 2, dadurch gekennzeichnet, daß die Ummantelungsschicht (1) eine synthetische Kunstfaserschicht und mindestens eine Klebstoffschicht aus thermoplastischen Kunstharzen oder hitzehärtbaren Kunstharzen aufweist.

5. Vorrichtung nach einem der Ansprüche 1 bis 4, dadurch gekennzeichnet, daß der Faseraufbau (2) des Bürstenabschnitts aus Kunstfasern gebildet wird.

6. Vorrichtung nach Anspruch 3, dadurch gekennzeichnet, daß der Faseraufbau (2) im Bürstenabschnitt aus anorganischen hochmolekularen Fasern oder Metallfasern gebildet wird.

7. Vorrichtung nach einem der Ansprüche 1 bis 6, dadurch gekennzeichnet, daß der Faseraufbau (2) eine oder mehrere Arten von hygienisch harmlosen Alkalisubstanzen, Oberflächenbehandlungsmitteln, Desinfektionsmitteln, Deodorants, Parfüm oder änchliches enthält.

**Revendications**

1. Instrument pour enlever la plaque dentaire et pour masser les gencives comprenant un corps de type tige mince qui comporte une structure fibreuse interne (2) formée de plusieurs fibres disposées suivant une direction longitudinale et une couche d'enveloppe (1) entourant et renforçant la structure fibreuse interne (2), cette couche d'enveloppe (1) se terminant à distance d'une extrémité de la structure fibreuse interne (2) pour laisser la structure fibreuse interne (2) à nu et procurer ainsi une section de brossage, caractérisé en ce que la couche d'enveloppe (1) comprend une résine thermoplastique qui est thermiquement amenée à adhérer, à l'état fondu.

2. Instrument suivant la revendication 1, caractérisé en ce que la section de brossage est réalisée par un découpage ou un affûtage de la couche d'enveloppe (1) destiné à mettre à nu la structure fibreuse interne (2).

3. Instrument suivant l'une ou l'autre des revendications 1 et 2, caractérisé en ce que la couche d'enveloppe (1) comprend une résine synthétique thermoplastique, tubulaire.

4. Instrument suivant l'une ou l'autre des revendications 1 et 2, caractérisé en ce que la couche d'enveloppe (1) comprend une couche fibreuse synthétique et au moins une couche d'adhesif choisi parmi des résines synthétiques thermoplastiques ou des résines synthétiques thermodurcissables.

5. Instrument suivant l'une quelconque des revendications 1 à 4, caractérisé en ce que la structure fibreuse (2) de la section de brossage est formée de fibres synthétiques.

6. Instrument suivant la revendication 3, caractérisé en ce que la structure fibreuse (2) de la section de brossage est formée de fibres inorganiques d'un poids moléculaire élevé ou de fibres métalliques.

7. Instrument suivant l'une quelconque des revendications 1 à 6, caractérisé en ce que la structure fibreuse (2) contient une ou plusieurs espèces de substances alcalines hygiéniquement sans danger, un agent tensio-actif, un bactéricide, un désodorisant, un parfum ou une substance analogue.

# F I G . I

# F I G . 2

# F I G . 3

# F I G. 4

(A)    (B)

# F I G. 5

(A)    (B)

# F I G. 6

(A)    (B)